# EUROPÄISCHE PATENTSCHRIFT

(11) **EP 1 656 720 B1**
(45) Veröffentlichungstag und Bekanntmachung des Hinweises auf die Patenterteilung: **09.05.2007**
(21) Anmeldenummer: 04763600.6
(22) Anmeldetag: 29.07.2004
(51) Int. Cl.: H02G 15/007, G02B 6/44

(54) **ABFANGVORRICHTUNG FÜR OPTISCHE KABEL SOWIE KABELMUFFE**
CLAMPING DEVICE FOR OPTICAL CABLES, AND CABLE JOINT
DISPOSITIF DE RECEPTION POUR CABLES OPTIQUES ET MANCHON DE CABLE

(30) Priorität: 20.08.2003 DE 10338848
(43) Veröffentlichungstag der Anmeldung: 17.05.2006
(73) Patentinhaber: CCS Technology, Inc., Wilmington, DE 19803 (US)
(72) Erfinder: MÜLLER, Thorsten, 58708 Menden (DE)
(74) Vertreter: Sturm, Christoph
(86) Internationale Anmeldenummer: PCT/EP2004/008496
(87) Internationale Veröffentlichungsnummer: WO 2005/020400

(56) Entgegenhaltungen:
- WO-A-97/12268
- DE-A- 19 820 027

## Beschreibung

Die Erfindung betrifft eine Vorrichtung zum Abfangen mindestens eines optischen Kabels gemäß dem Oberbegriff des Anspruchs 1. Des weiteren betrifft die Erfindung eine Kabelmuffe mit einer Vorrichtung zum Abfangen mindestens eines optischen Kabels gemäß dem Oberbegriff des Anspruchs 12 und ein Verfahren unter Verwendung der Vorrichtung.

Optische Kabel, die auch als Lichtwellenleiterkabel bezeichnet werden, unterliegen bei der Installation sowie im Betrieb großen mechanischen Belastungen. Die optischen Kabel müssen daher so konstruiert sein, dass dieselben eine gute Zugfestigkeit aufweisen und die Lichtwellenleiter innerhalb des Kabels frei von mechanischen Belastungen gehalten werden. Zu diesem Zweck sind in die Kabel Zugentlastungselemente integriert. Bei solchen Zugentlastungselementen kann es sich um ein zugfestes Zentralelement handeln, um welches die Lichtwellenleiterfasern gruppiert sind. Weiterhin sind optische Kabel bekannt, die kein Zentralelement aufweisen, bei denen jedoch die Zugentlastungselemente in den Kabelmantel des Kabels integriert sind. Auch sind Kabel bekannt, die sowohl ein zugfestes Zentralelement als auch in den Kabelmantel integrierte Zugentlastungselemente aufweisen.

Da optische Kabel nur mit einer endlichen Länge hergestellt werden können, müssen zum Aufbau eines Kabelnetzes Kabel endlicher Länge miteinander verbunden werden. Die durch den Aufbau eines optischen Kabels gewährleistete Zugfestigkeit ohne Belastung der Lichtwellenleiter muss auch an denjenigen Stellen gewährleistet sein, an denen die Verbindung von Kabeln endlicher Länge erfolgt. Diese Forderung ergibt sich nicht nur an den Stellen, an denen zwei oder mehrere Kabel aufeinandertreffen, sondern auch an den Punkten eines Kabelnetzes, an denen ein Kabel endet, und/oder ein anderes Kabel beginnt und/oder an denen Verzweigungspunkte bestehen. An diesen Stellen kommen üblicherweise Kabelmuffen zum Einsatz. Es ist aus dem Stand der Technik bekannt, innerhalb von Kabelmuffen oder sonstigen Verteilern die Zugentlastungselemente optischer Kabel abzufangen. Hierzu dienen sogenannte Abfangvorrichtungen.

Abfangvorrichtungen für optische Kabel sind aus der EP 0 693 699 B1, der EP 0 826 999 A2, der DE 42 26 858 C2 sowie der DE 198 20 027 A1 bekannt. All diesen aus dem Stand der Technik bekannten Abfangvorrichtungen für ein optisches Kabel ist gemeinsam, dass das optische Kabel unmittelbar im Bereich einer Kabeleinführung des optischen Kabels in die Kabelmuffe an der Abfangvorrichtung befestigt werden muss. Die Abfangvorrichtung muss hierzu zusammen mit dem abzufangenden optischen Kabel in einem Arbeitsvorgang am Dichtkörper der Kabelmuffe befestigt werden. Dies ist insbesondere bei Vollbelegung der Kabelmuffen problematisch, da dann, wenn mehrere Kabel durch den Dichtkörper geführt werden, der Zugriff auf die Abfangvorrichtung erschwert ist. Des weiteren ist den aus dem Stand der Technik bekannten Abfangvorrichtungen gemeinsam, dass dieselben jeweils, abhängig vom abzufangenden optischen Kabel sind. Dies bedeutet, dass abhängig von der Beschaffenheit des Kabels, insbesondere vom Durchmesser des optischen Kabels und der im optischen Kabel verwendeten Zugentlastungselemente, unterschiedliche Abfangvorrichtungen verwendet werden müssen. Zur Abfangung unterschiedlicher Kabelkonstruktionen sind nach dem Stand der Technik demnach stets unterschiedliche Abfangvorrichtungen erforderlich.

Aus der WO 97/12268 ist eine Abfangvorrichtung für optische Kabel bekannt, die zwei Elemente umfasst, wo ein abzufangendes Kabel mit Hilfe einer Kabelschelle an beiden Elementen befestigt und abgefangen wird.

Hiervon ausgehend liegt der vorliegenden Erfindung das Problem zu Grunde, eine neuartige Vorrichtung zum Abfangen mindestens eines optischen Kabels, eine neuartige Kabelmuffe und ein neuartiges Verfahren zur Bereitstellung einer Abfangung für optische Kabel zu schaffen.

Dieses Problem wird durch eine Vorrichtung zum Abfangen mindestens eines optischen Kabels mit den Merkmalen des Anspruchs 1 gelöst.

Die erfindungsgemäße Abfangvorrichtung erlaubt eine deutlich vereinfachte Befestigung des abzufangenden Kabels an der Abfangvorrichtung. So verfügt die erfindungsgemäße Abfangvorrichtung über zwei konstruktiv und funktional voneinander getrennte Module, nämlich das Basiselement bzw. Basismodul und das Abfangelement bzw. Abfangmodul. Das Basiselement ist im Bereich der Kabeleinführung am Dichtkörper der Kabelmuffe befestigbar. Unabhängig hiervon ist das abzufangende optische Kabel am Abfangelement außerhalb des Bereichs der Kabeleinführung befestigbar. Erst nach Befestigung des abzufangenden Kabels am Abfangelement wird eine Verbindung zwischen dem Basiselement und dem Abfangelement hergestellt, wobei hierzu die Verbindungseinrichtung dient. Mit Hilfe der Verbindungseinrichtung ist das Abfangelement zusammen mit dem am Abfangelement befestigten optischen Kabel lösbar am Basiselement zu befestigen. Hierdurch wird die Montage gegenüber den aus dem Stand der Technik bekannten Abfangvorrichtungen deutlich vereinfacht.

Ein weiterer Vorteil, der sich aus dem oben beschriebenen, modularen Aufbau der erfindungsgemäßen Abfangvorrichtung ergibt, liegt darin, dass das Basiselement unabhängig vom Typ des oder jeden abzufangenden optischen Kabels ausgestaltet ist. Lediglich das Abfangelement ist vom Typ des oder jeden abzufangenden optischen Kabels abhängig. Dies bedeutet, dass lediglich das Abfangelement an den Kabeltyp angepasst werden muss, wohingegen das Basiselement immer identisch ausgeführt sein kann. Die endgültige Befestigung des optischen Kabels über das entsprechende Abfangelement an dem Basiselement bleibt demnach immer gleich, so dass das Montageprinzip für alle Kabeltypen identisch ist. Dies erleichtert die Handhabung für den Monteur.

Die erfindungsgemäße Kabelmuffe ist im Patentanspruch 12 und das erfindungsgemäße Verfahren ist im Patentanspruch 14 definiert.

Bevorzugte Weiterbildungen der Erfindung ergeben sich aus den Unteransprüchen und der nachfolgenden Beschreibung. Ausführungsbeispiele der Erfindung werden nachfolgend anhand der Zeichnung näher erläutert. In der Zeichnung zeigt:
- Fig. 1:: eine erfindungsgemäße Vorrichtung zum Abfangen eines optischen Kabels bestehend aus einem Basiselement und einem Abfangelement nach einem ersten Ausführungsbeispiel der Erfindung in einer perspektivischen Seitenansicht,
- Fig. 2:: die erfindungsgemäße Vorrichtung gemäß Fig. 1 in einer perspektivischen Explosionsdarstellung,
- Fig. 3:: das Abfangelement der Vorrichtung gemäß Fig. 1 zusammen mit einem an demselben befestigten optischen Kabel in einer perspektivischen Seitenansicht,
- Fig. 4:: die Anordnung gemäß Fig. 4 in einer gegenüber Fig. 1 um 180° gedrehten perspektivischen Seitenansicht,
- Fig. 5:: ein Abfangelement einer erfindungsgemäßen Vorrichtung zum Abfangen eines optischen Kabels nach einem zweiten Ausführungsbeispiel der Erfindung in einer perspektivischen Seitenansicht,
- Fig. 6:: das Abfangelement der Fig. 6 mit dem Basiselement des Ausführungsbeispiels gemäß Fig. 1,
- Fig. 7:: ein Abfangelement einer erfindungsgemäßen Vorrichtung zum Abfangen eines optischen Kabels nach einem dritten Ausführungsbeispiel der Erfindung in einer perspektivischen Seitenansicht,
- Fig. 8:: das Abfangelement der Fig. 6 mit dem Basiselement der Ausführungsbeispiele gemäß Fig. 1 und 5 und mit einem abzufangenden optischen Kabel in einer perspektivischen Seitenansicht, und
- Fig. 9:: einen Dichtkörper mit mehreren Vorrichtungen zum Abfangen eines optischen Kabels nach einem weiteren Ausführungsbeispiel der Erfindung in einer perspektivischen Seitenansicht.

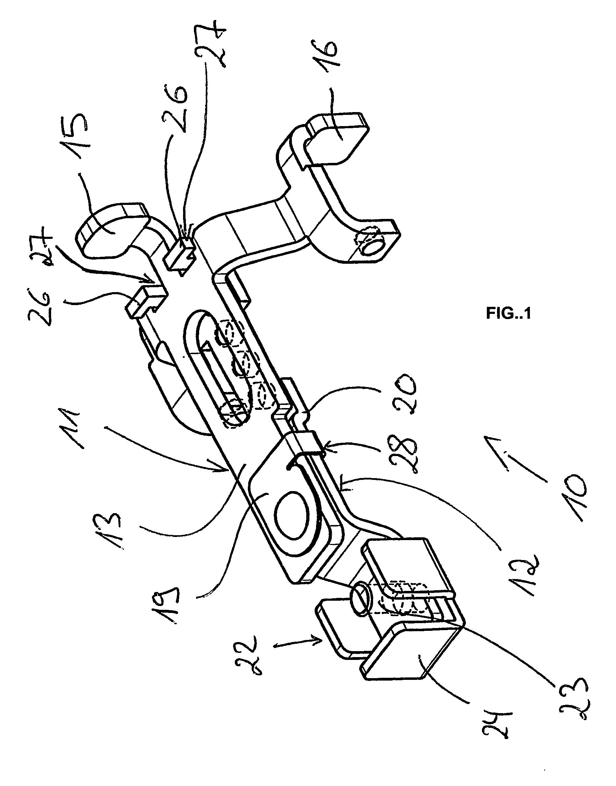

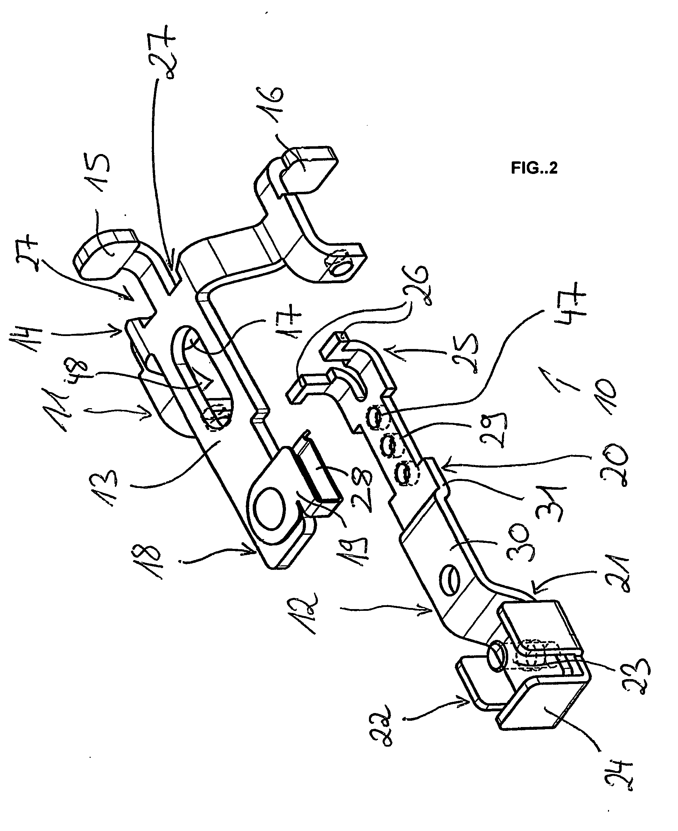

Nachfolgend wird die Erfindung unter Bezugnahme auf Fig. 1 bis 9 in größerem Detail erläutert. Fig. 1 zeigt eine erfindungsgemäße Vorrichtung zum Abfangen eines optischen Kabels, nachfolgend kurz Abfangvorrichtung 10 genannt, in perspektivischer Seitenansicht. Fig. 2 zeigt diese Abfangvorrichtung 10 in einer Explosionsdarstellung.

Die Abfangvorrichtung 10 gemäß Fig. 1 und 2 verfügt über zwei Module, nämlich ein Basiselement 11 und ein vom Basiselement 11 konstruktiv sowie funktional getrenntes Abfangelement 12. Das Basiselement 11 der Abfangvorrichtung 10 verfügt über einen stabförmigen bzw. plattenförmigen Grundkörper 13. An einem ersten Ende 14 des Grundkörpers 13 trägt der Grundkörper 13 im gezeigten Ausführungsbeispiel drei zapfenartige und abgewinkelte Vorsprünge 15, 16 und 17. Ein erster Vorsprung 15 wird aus einer nach oben abgewinkelten Verlängerung des Grundkörpers 13 gebildet. Die beiden anderen Vorsprünge 16, 17 sind nach unten abgewinkelt und seitlich neben dem Vorsprung 15 bzw. neben dem Grundkörper 13 positioniert. Auf die Funktion der Vorsprünge 15, 16 und 17 wird weiter unten noch in größerem Detail eingegangen. An dieser Stelle sei bereits darauf hingewiesen, dass das Basiselement 11 über die Vorsprünge 15, 16 und 17 an einem Dichtkörper einer Kabelmuffe befestigt werden kann. An einem dem ersten Ende 14 gegenüberliegenden zweiten Ende 18 des Grundkörpers 13 des Basiselements 11 ist derselben eine Verbindungseinrichtung 19 zugeordnet. Die Verbindungseinrichtung 19 ist im gezeigten, bevorzugten Ausführungsbeispiel als Drehclip ausgebildet. Mithilfe der Verbindungseinrichtung 19 ist das Abfangelement 12 der Abfangvorrichtung 10 lösbar mit dem Basiselement 11 verbindbar.

Das Abfangelement 12 verfügt ebenfalls über einen stabförmigen bzw. plattenförmigen Grundkörper 20. An einem ersten Ende 21 des Grundköpers 20 ist dem Abfangelement 12 des Ausführungsbeispiels gemäß Fig. 1 und 2 eine Fixiereinrichtung 22 zugeordnet. In der Fixiereinrichtung 22 kann ein Zugentlastungselement eines abzufangenden optischen Kabels fixiert werden. Hierzu dient eine Klemmschraube 23 mithilfe derer zum Bespiel ein zugfestes Zentralelement eines optischen Kabels am Abfangelement 12 fixiert wird. Hierdurch wird eine Sicherung vor Zugbeanspruchung bereitgestellt. Ein Anschlag 24 der Fixiereinrichtung 22 stellt weiterhin eine Sicherung vor Schubbeanspruchung bereit. Durch die Kombination des Anschlags 24 mit der Klemmschraube 23 wird demnach sowohl ein Herauswandern als auch ein Hineinwandern des oder jeden Zugentlastungselements des optischen Kabels aus bzw. in eine Kabelmuffe, in welcher die erfindungsgemäße Abfangvorrichtung 10 zum Einsatz kommt, verhindert. An einem dem ersten Ende gegenüberliegenden zweiten Ende 25 verfügt der Grundkörper 20 des Abfangelements 12 über Vorsprünge 26, die in entsprechende Ausnehmungen 27 des Basiselements 11 eingreifen, wobei diese Ausnehmungen 27 im Bereich des ersten Endes 14 des Grundkörpers 13 des Basiselements 11 angeordnet sind. Über die Vorsprünge 26 kann das Abfangelement 12 mit dem Basiselement 11 verhakt werden. Zur endgültigen Befestigung des Abfangelements 12 am Basiselement 11 wird die Verbindungseinrichtung 19, die bevorzugt als Drehclip ausgebildet ist, aus der in Fig. 2 dargestellten Freigabeposition in die in Fig. 1 dargestellte Verriegelungsposition verdreht. Die als Drehclip ausgebildete Verbindungseinrichtung 19 umgreift dann mit einem Steg 28 den Grundkörper 20 des Abfangelements 12. Auf diese Art und Weise kann eine besonders einfache und sichere Befestigung des Abfangelementes 12 am Basiselement 11 realisiert werden.

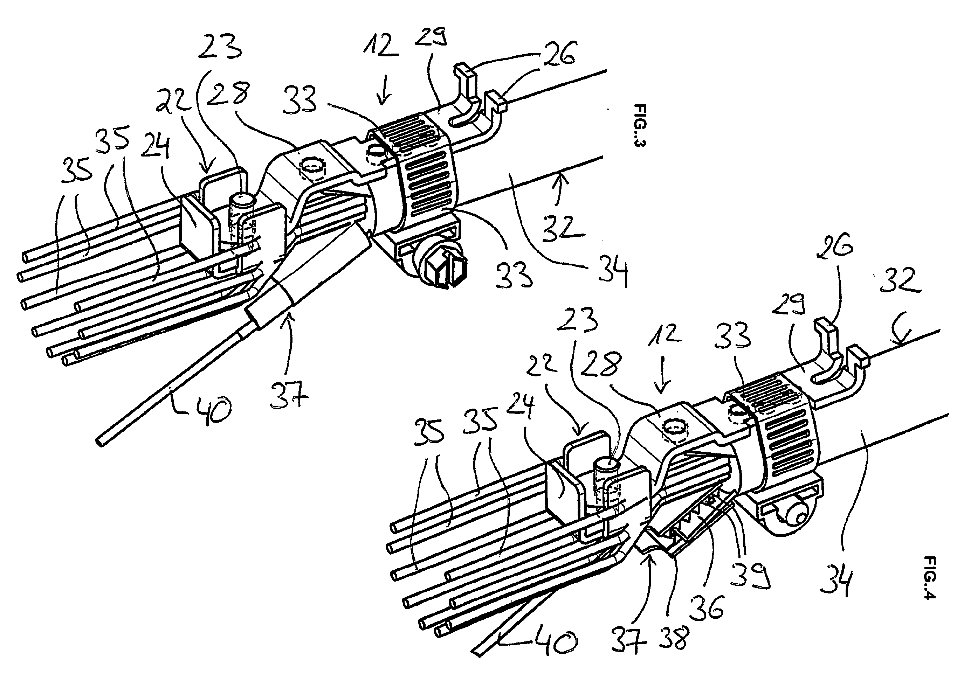

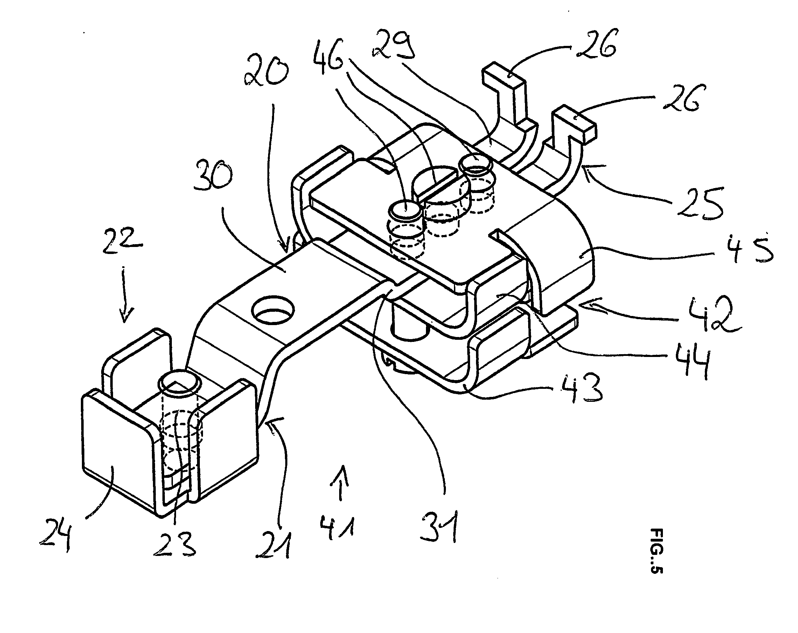

Wie insbesondere Fig. 2 entnommen werden kann, verfügt der Grundkörper 20 des Abfangelements 12 über zwei Abschnitte 29 und 30. Die beiden Abschnitte 29 und 30 sind in der Höhe versetzt zueinander angeordnet und durch einen schräg verlaufenden Abschnitt 31 miteinander verbunden. Ein erster Abschnitt 29 des Grundkörpers 20 schließt sich an das zweite Ende 25 des Grundkörpers 20 an, ein zweiter Abschnitt 30 schließt sich an das erste Ende 21 des Grundkörpers 20 an. Wie Fig. 1 entnommen werden kann, greift der Steg 28 der als Drehclip ausgebildeten Verbindungseinrichtung 19 in der Verriegelungsposition am Abschnitt 30 des Grundkörpers 20 an. Der gegenüber dem Abschnitt 30 in der Höhe geringfügig nach unten versetzte Abschnitt 29 dient gemäß Fig. 3 und 4 der Befestigung eines optischen Kabels 32 mithilfe einer Schlauchschelle 33. Der Höhenversatz zwischen dem Abschnitt 29 und dem Abschnitt 30 des Grundkörpers 20 des Abfangelements 12 dient demnach einerseits der Bereitstellung eines Aufnahmeraums für die Schlauchschelle 33 und andererseits der problemlosen Aufnahme des Stegs 28 der als Drehclip ausgebildeten Verbindungseinrichtung 19.

Wie Figs. 3 und 4 entnommen werden kann, greift die Schlauchschelle 33 am Kabelmantel 34 des optischen Kabels 32 an. Im unmittelbaren Anschluss an die Befestigung des optischen Kabels 32 über die Schlauchschelle 33 ist der Kabelmantel 34 des Kabels 32 entfernt und zu Bündeladern 35 zusammengefasste Lichtwellenleiterfasern werden getrennt aus dem Kabel 32 herausgeführt. Das vereinzelte Zentralelement, welches in Fig. 3 und 4 nicht erkennbar ist, wird in der Fixiereinrichtung 22 abgefangen. Das Zentralelement ist hierzu mithilfe der Klemmschraube 23 in der Fixiereinrichtung 22 fixiert und vor Zugbelastung abgefangen. Der Anschlag 24 der Fixiereinrichtung 22 bewirkt die Schubabfangung.

Wie insbesondere Fig. 4 entnommen werden kann, ist in den Kabelmantel 34 des optischen Kabels 32 eine Schirmung vorzugsweise aus Aluminium integriert. Ein Abschnitt 36 dieser Aluminiumschirmung ist gemäß Fig. 4 aus dem Kabelmantel herausgetrennt und von einer Erdungseinrichtung 37 kontaktiert. Die Erdungseinrichtung 37 verfügt über ein V-förmig ausgebildetes Kontaktelement 38 mit Kontaktzähnen 39, wobei das V-förmige Kontaktelement 38 derart zusammengedrückt ist, dass die Kontaktzähne 39 den Abschnitt 36 des Aluminiumschirms kontaktieren. An diesem Kontaktelement 38 greift eine Erdungsleitung 40 an. Die Erdungseinrichtung 37 ist unabhängig von der Abfangvorrichtung 10.

Das Ausführungsbeispiel gemäß Fig. 1 bis 4 dient der Abfangung eines einzigen optischen Kabels mithilfe einer Abfangvorrichtung. Hierzu wird das optische Kabel 32 an dem Abfangelement 12, welches auch Abfangmodul bezeichnet werden kann, mithilfe der Schlauchschelle 33 befestigt und ein Zentralelement des Kabels 32 wird in einer Fixiereinrichtung 22 des Abfangelements 12 befestigt. Da das Abfangelement 12 bzw. das Abfangmodul funktional und konstruktiv vom Basiselement 11, welches auch als Basismodul bezeichnet werden kann, getrennt ist, erfolgt die Befestigung des Kabels 32 am Abfangelement 12 außerhalb des Bereichs der Kabelmuffe, insbesondere außerhalb eines Kabeleinführungsbereichs eines Dichtkörpers der Kabelmuffe. Erst nach Befestigung des Kabels 32 am Abfangelement 12 erfolgt die eigentliche Befestigung des optischen Kabels 32 in der Kabelmuffe, nämlich an dem bereits in der Kabelmuffe installierten Basiselement 11. Hierzu müssen lediglich die Vorsprünge 26 des Abfangelements 12 in die korrespondierenden Ausnehmungen 27 des Basiselements 11 eingerastet werden und die als Drehclip ausgebildete Verbindungseinrichtung 19 aus der in Fig. 2 dargestellten Freigabeposition in die in Fig. 1 dargestellte Schließposition verdreht werden. Dies ist auch bei Vollbelegung innerhalb der Kabelmuffe und einer Vielzahl von abzufangenden optischen Kabeln ohne Schwierigkeiten möglich. Da des weiteren das Basiselement 11 unabhängig vom Typ der abzufangenden Kabel ist und lediglich das Abfangelement 12 auf den Typ des abzufangenden Kabels abzustimmen ist, bleibt der Verbindungsmechanismus des Basiselements 11 mit dem Abfangelement 12 über die Verbindungseinrichtung 19 und die Befestigung des Basiselements 11 in der Kabelmuffe über die Vorsprünge 15, 16 und 17 für den Monteur stets gleich. Auch dies verringert den Montageaufwand.

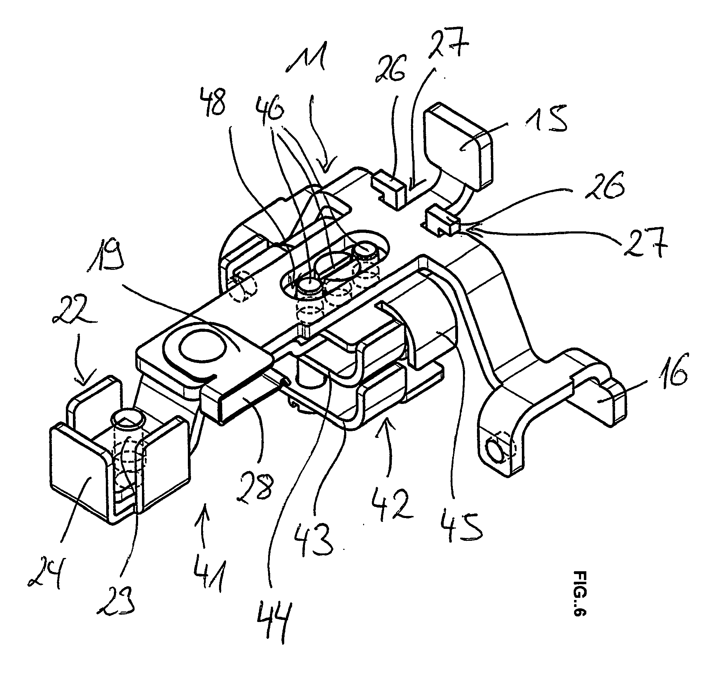

Fig. 5 zeigt ein Abfangmodul bzw. ein Abfangelement 41 für eine Abfangvorrichtung nach einem zweiten Ausführungsbeispiel der Erfindung. Das Abfangelement 41 gemäß Fig. 5 unterscheidet sich vom Abfangelement 12 gemäß Fig. 2 dadurch, dass das Abfangelement 41 gemäß Fig. 5 nicht lediglich der Befestigung eines optischen Kabels, sondern vielmehr der Befestigung bzw. Abfangung mehrerer optischer Kabel dient. Da das Abfangelement 41. gemäß Fig. 5 jedoch in großen Teilen dem Abfangelement 12 gemäß Fig. 2 entspricht, werden zur Vermeidung unnötiger Wiederholungen für gleiche Baugruppen gleiche Bezugsziffern verwendet. An dieser Stelle wird lediglich auf die Unterschiede im Detail eingegangen.

Wie Fig. 5 entnommen werden kann, ist dem Abschnitt 29 des Grundkörpers 20 des Abfangelements 21 eine Klemmeinrichtung 42 zugeordnet. Die Klemmeinrichtung 42 verfügt im gezeigten Ausführungsbeispiel über insgesamt drei plattenförmige Elemente 43, 44 und 45, wobei die plattenförmigen Elemente 43, 44 und 45 über drei Schrauben 46 am Abschnitt 29 befestigt sind. Hierzu sind in den Abschnitt 29 die bereits im Zusammenhang mit dem Ausführungsbeispiel gemäß Fig. 2 gezeigten Bohrungen 47 integriert. Die Schrauben 46 durchdringen die Bohrungen 47. Hieraus folgt unmittelbar, dass das Abfangelement 12 gemäß Fig. 2 auf einfache Art und Weise zum Abfangelement 41 gemäß Fig. 5 umgebaut werden kann. Wie Fig. 5 zeigt, erstrecken sich die Schrauben 46 in unterschiedlichen Richtungen durch die Bohrungen 47 bzw. die plattenförmigen Elemente 43, 44 und 45 der Klemmeinrichtung 42. Im gezeigten Ausführungsbeispiel erstrecken sich die beiden seitlichen Schrauben 46 von unten nach oben und die mittlere Schraube erstreckt sich von oben nach unten. Die Schraubenköpfe der Schrauben 46 halten selbst bei gelockerten Schrauben 46 die plattenförmigen Elemente 43, 44 und 45 am Abschnitt 29. Bei gelockerten Schrauben 46 werden die abzufangenden Kabel zwischen den plattenförmigen Elementen 43 und 44 bzw. 44 und 45 positioniert und anschließend werden die Schrauben 46 festgezogen und hierdurch eine Klemmung und damit Fixierung der Kabel erreicht. Die Klemmeinrichtung 42 gemäß Fig. 5 dient der Fixierung bzw. Befestigung von insgesamt vier optischen Kabeln am Abfangelement 41, wobei zwei Kabel zwischen den Elementen 43 und 44 seitlich nebeneinander und zwei weitere Kabel darüber zwischen den Elementen 44 und 45 ebenfalls seitlich nebeneinander in klemmender Weise am Befestigungselement 41 fixiert bzw. befestigt werden. Die in diesen Kabeln integrierten Zugentlastungselemente können dann gemeinsam in der Fixiereinrichtung 22 des Abfangelements 41 gegenüber Zugbelastung und Schubbelastung gesichert werden.

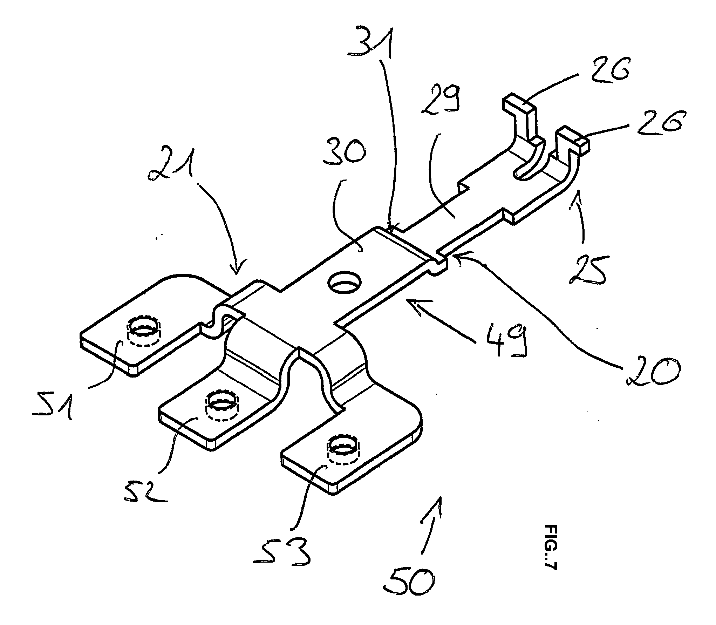

Fig. 6 zeigt das Abfangelement 41 gemäß Fig. 5 in Verbindung mit dem Basiselement 11 gemäß Fig. 2, wobei, wie bereits erwähnt, das Basiselement 11 unabhängig vom abzufangenden Kabeltyp und damit unabhängig von der konkreten Ausgestaltung des Abfangelements ist. Auch hier werden zur Vermeidung unnötiger Wiederholungen für gleiche Baugruppen gleiche Bezugsziffern verwendet. So zeigt Fig. 6, dass die Verbindung des Abfangelements 41 gemäß Fig. 5 mit dem Basiselement 11 der Verbindung des Abfangelements 11 gemäß Fig. 2 entspricht. Die Vorsprünge 26 sind wiederum in die korrespondierenden Ausnehmungen 27 des Basiselements 11 eingehakt und die endgültige Befestigung erfolgt letztendlich über die als Drehclip ausgebildete Verbindungseinrichtung 19. Damit die Schrauben 46 den Zusammenbau von Abfangelement 41 und Basiselement 11 nicht behindern, ist in das Basiselement 11 eine Ausnehmung 48 integriert, in die im in Fig. 6 gezeigten, zusammengefügten Zustand von Abfangelement 41 und Befestigungselement 11 die Schrauben 46 mit ihren Schraubenköpfen bzw. gegenüberliegenden Gewindeenden eingreifen.

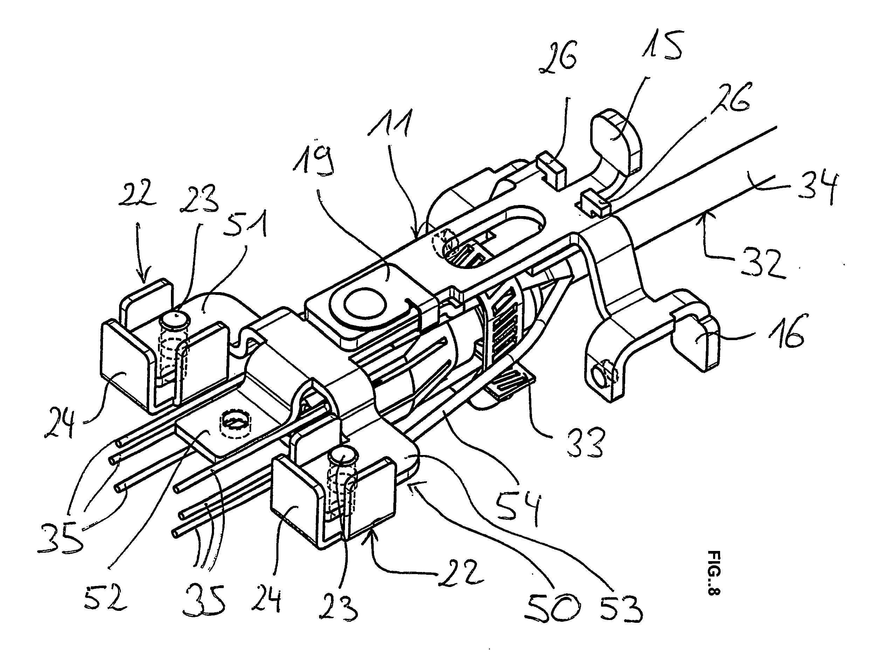

Fig. 7 zeigt einen Grundkörper 49 eines Abfangelements 50 nach einem dritten Ausführungsbeispiel der hier vorliegenden Erfindung. Das Abfangelement 50 gemäß Fig. 7 entspricht vom prinzipiellen Aufbau wiederum dem Abfangelement 12 gemäß Fig. 2. Zur Vermeidung unnötiger Wiederholungen werden daher auch hier für gleiche Baugruppen gleiche Bezugsziffern verwendet. Es wird wiederum nur auf die Unterschiede zum Abfangelement 12 gemäß Fig. 2 eingegangen.

Im Unterschied zum Ausführungsbeispiel gemäß Fig. 2 verfügt das Abfangelement 50 gemäß Fig. 7 im Bereich des ersten Endes 21 des Grundkörpers 20 nicht lediglich über eine Zunge zur Befestigung einer Fixiereinrichtung 22, sondern über insgesamt drei Zungen 51, 52 und 53 zur Befestigung solcher Fixiereinrichtungen. Fig. 8 zeigt das Abfangelement 50 gemäß Fig. 7 mit zwei Fixiereinrichtungen 22, wobei jeweils eine Fixiereinrichtung 22 im Bereich einer der beiden seitlichen Zungen 51 bzw. 53 angeordnet ist. Im Ausführungsbeispiel der Fig. 8 ist die mittlere Zunge 52 frei gelassen, d.h. im Bereich dieser mittleren Zunge 52 befindet sich keine Fixiereinrichtung. Es ist jedoch auch möglich, im Bereich dieser mittleren Zunge 52 eine Fixiereinrichtung 22 anzuordnen. Fig. 8 zeigt das Abfangelement 50 zusammen mit dem Basiselement 11 und einem an dem Abfangelement 50 befestigten optischen Kabel 52. Die Befestigung des Kabels 52 am Abfangelement 50 erfolgt in derselben Art und Weise, wie dies im Zusammenhang mit Fig. 3 und 4 für das Abfangelement 12 beschrieben wurde. Es kann daher auf die obigen Ausführungen verwiesen werden. Die letztendliche Fixierung bzw. Befestigung des Kabels 52 über das Abfangelement 50 am Basiselement 51 erfolgt ebenfalls auf die bereits im Zusammenhang mit den Ausführungsbeispielen gemäß Fig. 1 bis 6 beschriebene Art und Weise. Auch hier kann zur Vermeidung unnötiger Wiederholungen auf die obigen Ausführungen verwiesen werden.

Beim Ausführungsbeispiel der Fig. 8 verfügt das optische Kabel 32 über kein Zentralelement zur Zugentlastung, sondern vielmehr über zwei in den Kabelmantel 34 integrierte Zugentlastungselemente 54, wobei diese Zugentlastungselemente 54 im Kabelmantel 34 diametral gegenüberliegend integriert sind. Zur einfachen Fixierung der beiden Zugentlastungselemente 54 wird demnach das auf diesen Kabeltyp abgestimmte Abfangelement 50 verwendet, wobei jeweils ein Zugentlastungselement 54 in den Bereich einer der beiden Fixiereinrichtungen 22 geführt und dort über die Klemmschraube 23 befestigt wird. In dem Fall, in dem das Lichtwellenleiterkabel neben den in den Kabelmantel integrierten Zugentlastungselementen 54 auch ein Zentralelement umfasst, würde selbstverständlich zur Befestigung dieses Zentralelements an dem Abfangelement 50 auch im Bereich der Zunge 52 eine entsprechende Fixiereinrichtung 22 angeordnet sein. Weiterhin sei hier darauf hingewiesen, dass in den Fixiereinrichtungen 22 auch in den Kabelmantel integrierte, zugfeste Fasern, wie zum Beispiel Aramitfasern, befestigt werden können. Diese Aramitfasern werden vorzugsweise miteinander verflochten und im Bereich einer der Fixiereinrichtungen befestigt bzw. abgefangen.

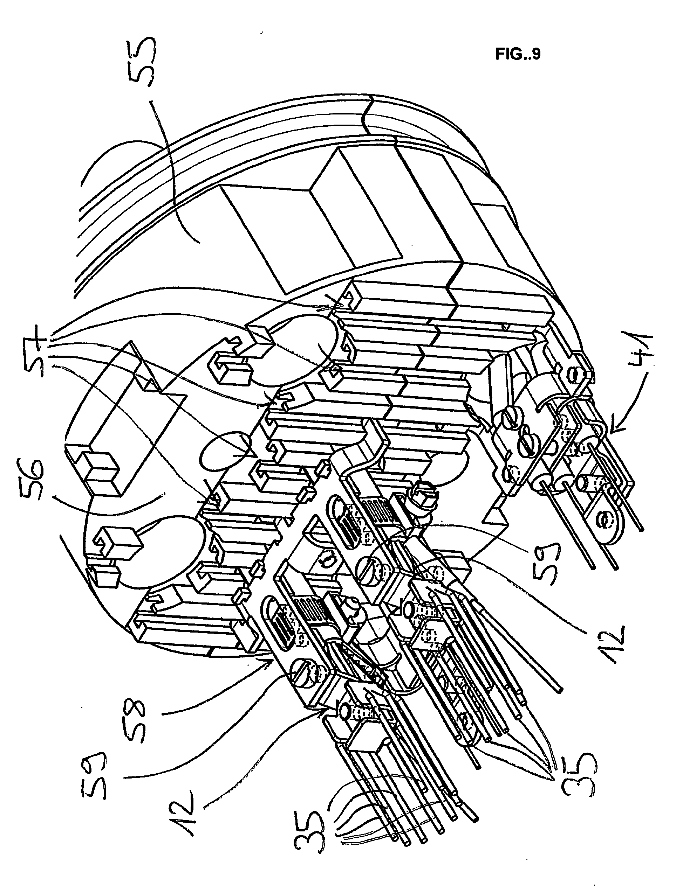

Fig. 9 zeigt einen Ausschnitt aus einer Kabelmuffe im Bereich eines Dichtkörpers 55 derselben. Durch den Dichtkörper 55 werden Kabelenden in die Kabelmuffe eingeführt. Wie Fig. 9 entnommen werden kann, sind auf einer Innenseite 56 des Dichtkörpers 55 schlitzartige Führungen 57 integriert, wobei die Führungen 57 parallel zueinander verlaufen. In diese schlitzartigen Führungen 57 sind die Basiselemente 11 der Abfangvorrichtungen mithilfe ihrer Vorsprünge 15, 16 bzw. 17 einführbar. Dies erlaubt eine besonders einfache und schnelle Befestigung der Basiselemente 11 am Dichtkörper 55. So zeigt das Ausführungsbeispiel gemäß Fig. 9 ein Basiselement 58, welches prinzipiell identisch zu den Basiselementen 11 gemäß den Ausführungsbeispielen im Sinne der Fig. 1 bis 8 ausgebildet ist, an welchem jedoch zwei Abfangelemente 12 befestigt werden können. Auch im Ausführungsbeispiel der Fig. 9 ist das Basiselement 58, welches hier der Befestigung von zwei Abfangelementen 12 dient, funktional und konstruktiv von den Abfangelementen getrennt und unabhängig vom abzufangenden Kabeltyp. Im Zusammenhang mit Fig. 9 soll lediglich dargestellt werden, dass es im Sinne der Erfindung zahlreiche Variationsmöglichkeiten gibt, die von der erfindungsgemäßen Idee eines modularen Aufbaus von Abfangvorrichtungen Gebrauch machen. Weiterhin zeigt Fig. 9, dass die Abfangelemente 12 am Basiselement 58 über eine Verbindungseinrichtung 59 befestigt sind, wobei die Verbindungseinrichtung 59 im Unterschied zu den Ausführungsbeispielen gemäß Fig. 1 bis 8 nicht als Drehclip, sondern als Schraube ausgebildet ist. An dieser Stelle sei darauf hingewiesen, dass die Verwendung eines Drehclips als Verbindungseinrichtung gegenüber der Verwendung einer Schraube bevorzugt ist, weil mit dem Drehclip eine deutlich schnellere und einfachere Befestigung der Abfangelemente am Basiselement erzielt werden kann. Fig. 9 zeigt als Schrauben ausgebildete Verbindungseinrichtungen 59 lediglich mit der Intention, auch hinsichtlich der Verbindungseinrichtungen eine alternative Ausgestaltung aufzuzeigen. Gleiches gilt für die Abfangvorrichtung im unteren, rechten Bereich des Dichtkörpers 55, welche prinzipiell dem Ausführungsbeispiel gemäß Fig. 5 und 6 entspricht und der Abfangung mehrerer optischer Kabel dient.

Im Sinne der Erfindung wird eine modulare Abfangvorrichtung vorgeschlagen, wobei die modulare Abfangvorrichtung aus einem Basiselement bzw. Basismodul und einem Abfangelement bzw. Abfangmodul besteht, die über eine Verbindungseinrichtung lösbar miteinander verbunden werden können. Das Basiselement bzw. Basismodul ist unabhängig vom jeweiligen abzufangenden Kabeltyp, das Abfangelement bzw. Abfangmodul hingegen wird auf den abzufangenden Kabeltyp abgestimmt. Die Verbindungseinrichtung ist vorzugsweise als Drehclip ausgeführt. Zur Montage bzw. zur Abfangung eines optischen Kabels innerhalb einer Kabelmuffe wird das Basiselement am Dichtkörper befestigt. Das Abfangelement ist vom Basiselement gelöst und außerhalb des Bereichs der Kabeleinführung kann von einem Monteur das abzufangende Kabel an dem Abfangelement bzw. dem Abfangmodul befestigt werden. Das so am Abfangelement bzw. Abfangmodul befestigte optische Kabel kann dann zusammen mit dem Abfangelement am Basiselement ohne zur Hilfenahme von Werkzeugen durch einfaches Einhängen der Vorsprünge in die korrespondierenden Ausnehmungen des Basiselements und durch Verdrehen des Drehclips befestigt werden. Die Befestigung des Abfangelements am Basiselement ist für alle abzufangenden Kabeltypen identisch, so dass das Montagesystem für den Monteur gleich bleibt. Selbst bei einer maximalen Bestückung einer Kabelmuffe ist mit Hilfe der erfindungsgemäßen Vorrichtung eine einfache, sichere und schnelle Montage möglich.

### Bezugszeichenliste

- 10: Abfangvorrichtung
- 11: Basiselement
- 12: Abfangelement
- 13: Grundkörper
- 14: erstes Ende
- 15: Vorsprung
- 16: Vorsprung
- 17: Vorsprung
- 18: zweites Ende
- 19: Verbindungseinrichtung
- 20: Grundkörper
- 21: erstes Ende
- 22: Fixiereinrichtung
- 23: Klemmschraube
- 24: Anschlag
- 25: zweites Ende
- 26: Vorsprung
- 27: Ausnehmung
- 28: Steg
- 29: Abschnitt
- 30: Abschnitt
- 31: Abschnitt
- 32: Kabel
- 33: Schlauchschelle
- 34: Kabelmantel
- 35: Bündelader
- 36: Abschnitt
- 37: Erdungseinrichtung
- 38: Kontaktelement
- 39: Kontaktzahn
- 40: Erdungsleitung
- 41: Abfangelement
- 42: Klemmeinrichtung
- 43: Element
- 44: Element
- 45: Element
- 46: Schraube
- 47: Bohrung
- 48: Ausnehmung
- 49: Grundkörper
- 50: Abfangelement
- 51: Zunge
- 52: Zunge
- 53: Zunge
- 54: Zugentlastungselement
- 55: Dichtkörper
- 56: Innenseite
- 57: Führung
- 58: Basiselement
- 59: Verbindungseinrichtung

## Patentansprüche

1. Vorrichtung zum Abfangen mindestens eines, einen Kabelmantel, mehrere Lichtwellenleiter und mindestens ein Zugentlastungselement aufweisenden, optischen Kabels, **gekennzeichnet durch** einen modularen Aufbau aus zwei konstruktiv und funktional voneinander getrennten Modulen, nämlich aus einem Basiselement (11, 58) und einem Abfangelement (12, 41, 50), wobei:
a) das Basiselement (11, 58) einen in etwa stabförmigen bzw. plattenförmigen Grundkörper (13) aufweist, wobei an einem ersten Ende (14) des Grundkörpers (13) des Basiselements mindestens ein zapfenartiger und abgewinkelter Vorsprung (15, 16, 17) zur Befestigung des Basiselements (11, 58) an einem Dichtköper (55) einer Kabelmuffe ausgebildet ist;
b) das Abfangelement (12, 41, 50) einen in etwa stabförmigen bzw. plattenförmigen Grundkörper (20, 49) aufweist, wobei an einem ersten Ende (21) des Grundkörpers (20, 49) des Abfangelements mindestens eine Fixiereinrichtung (22) für das oder jedes Zugentlastungselement des oder jeden abzufangenden optischen Kabels angeordnet ist, wobei das oder jedes abzufangende optische Kabel an einem ersten Abschnitt (29) des Grundkörpers (20, 49) des Abfangelements (12, 41, 50) befestigbar ist;
c) das am Dichtkörper befestigte Basiselement (11, 58) und das Abfangelement (12, 41, 50) mit dem oder jedem am Abfangelement (12, 41, 50) abgefangenen optische Kabel über eine Verbindungseinrichtung (19, 59) miteinander verbindbar sind.

2. Vorrichtung nach Anspruch 1, **dadurch gekennzeichnet, dass** das Basiselement (11, 58) unabhängig vom Typ des oder jeden abzufangenden optischen Kabels ist.

3. Vorrichtung nach Anspruch 1 oder 2, **dadurch gekennzeichnet, dass** die Verbindungseinrichtung (19, 59) an einem zweiten Ende des Grundkörpers (13) des Basiselements (11, 58) angeordnet ist, wobei das Abfangelement (12, 41, 50) über die Verbindungseinrichtung (19, 29) lösbar mit dem Basiselement (11, 58) verbindbar ist.

4. Vorrichtung nach einem oder mehreren der Ansprüche 1 bis 3, **dadurch gekennzeichnet, dass** die Verbindungseinrichtung (19) als Drehclip ausgebildet ist.

5. Vorrichtung nach einem oder mehreren der Ansprüche 1 bis 4, **dadurch gekennzeichnet, dass** mit dem Basiselement (11, 58) mindestens ein Abfangelement (12, 41, 50) verbindbar ist.

6. Vorrichtung nach einem oder mehreren der Ansprüche 1 bis 5, **dadurch gekennzeichnet, dass** das Abfangelement (12, 41, 50) abhängig vom Typ des oder jeden abzufangenden optischen Kabels ist.

7. Vorrichtung nach einem oder mehreren der Ansprüche 1 bis 6, **dadurch gekennzeichnet, dass** das Abfangelement (12, 41, 50) eine Fixiereinrichtung (22) für die Abfangung eines Zentralelements des oder jeden optischen Kabels und/oder eine Fixiereinrichtung (22) für die Abfangung für in den Kabelmantel des oder jeden optischen Kabels integrierte Zugentlastungselemente und/oder eine Fixiereinrichtung (22) für die Abfangung für in den Kabelmantel des oder jeden optischen Kabels integrierte zugfeste Fasern aufweist.

8. Vorrichtung nach einem oder mehreren der Ansprüche 1 bis 7, **dadurch gekennzeichnet, dass** an dem ersten Ende (14) des Grundkörpers (13) des Basiselements Ausnehmungen (27) zum Eingriff von Vorsprüngen (26) des Abfangelements (11, 41, 50) angeordnet sind, und dass an einem zweiten Ende (25) des Grundkörpers (20, 49) des Abfangelements die Vorsprünge (26) zum Eingriff in die Ausnehmungen (27) des Basiselements (11, 58) angeordnet sind.

9. Vorrichtung nach einem oder mehreren der Ansprüche 1 bis 8, **dadurch gekennzeichnet, dass** die Verbindungseinrichtung (19) des Basiselements (11, 58) an einem zweiten Abschnitt (30) des Grundkörpers (20, 49) des Abfangelements (12, 41, 50) angreift.

10. Vorrichtung nach einem oder mehreren der Ansprüche 1 bis 9, **dadurch gekennzeichnet, dass** ein abzufangendes optisches Kabel an dem ersten Abschnitt (29) über eine Schlauchschelle (33) befestigbar ist.

11. Vorrichtung nach Anspruch 10, **dadurch gekennzeichnet, dass** mehrere abzufangende optische Kabel an dem ersten Abschnitt (29) über eine dem ersten Abschnitt zugeordnete Klemmeinrichtung (42) befestigbar sind.

12. Kabelmuffe zur strukturierten Ablage bzw. Handhabung von Lichtwellenleitern, mit einem Dichtkörper (55) zur Einführung mindestens eines optischen Kabels, und mit mehreren Spleißkassetten zur Ablage der Lichtwellenleiter, **gekennzeichnet durch** mindestens eine Vorrichtung nach einem oder mehreren der Ansprüche 1 bis 11.

13. Kabelmuffe nach Anspruch 12, **dadurch gekennzeichnet, dass** auf einer Innenseite (56) des Dichtkörpers mehrere in etwa parallel zueinander verlaufende, schlitzartige Führungen (57) angeordnet sind, in welche die Basiselemente (11, 58) mit entsprechend ausgestalteten Vorsprüngen (15, 16, 17) einführbar sind.

14. Verfahren zur Bereitstellung einer Abfangung für ein optisches Kabel unter Verwendung mindestens einer Vorrichtung nach einem oder mehreren der Ansprüche 1 bis 11, mit folgenden Schritten:
a) Bereitstellen einer Kabelmuffe nach Anspruch 12 oder 13,
b) Bereitstellen einer Vorrichtung nach einem oder mehreren der Ansprüche 1 bis 11,
c) Bereitstellen eines abzufangenden optischen Kabels,
d) Befestigen des Basiselements am Dichtkörper der Kabelmuffe,
e) Befestigen des Kabels am Abfangelement,
f) Verbinden des Abfangelements und mit dem am Abfangelement befestigten optischen Kabel mit dem Basiselement.

## Claims

1. Apparatus for restraining at least one optical cable having a cable sheath, a plurality of optical waveguides and at least one strain-relief element, **characterized by** a modular design comprising two modules which are separate from one another functionally and in design terms, namely comprising a base element (11, 58) and a restraining element (12, 41, 50), with:
a) the base element (11, 58) having an approximately rod-shaped or plate-shaped basic body (13), at least one pin-like and bent-back projection (15, 16, 17) for fixing the base element (11, 58) on a sealing body (55) of a cable joint being formed at a first end (14) of the basic body (13) of the base element;
b) the restraining element (12, 41, 50) having an approximately rod-shaped or plate-shaped basic body (20, 49), at least one fixing device (22) for the or each strain-relief element of the or each optical cable to be restrained being arranged at a first end (21) of the basic body (20, 49) of the restraining element, the or each optical cable to be restrained being capable of being fixed on a first section (29) of the basic body (20, 49) of the restraining element (12, 41, 50);
c) the base element (11, 58), which is fixed to the sealing body, and the restraining element (12, 41, 50) with the or each optical cable restrained on the restraining element (12, 41, 50) being capable of being connected to one another via a connection device (19, 59).

2. Apparatus according to Claim 1, **characterized in that** the base element (11, 58) is not dependent on the type of the or each optical cable to be restrained.

3. Apparatus according to Claim 1 or 2, **characterized in that** the connection device (19, 59) is arranged at a second end of the basic body (13) of the base element (11, 58), the restraining element (12, 41, 50) being capable of being connected detachably to the base element (11, 58) via the connection device (19, 29).

4. Apparatus according to one or more of Claims 1 to 3, **characterized in that** the connection device (19) is in the form a rotary clip.

5. Apparatus according to one or more of Claims 1 to 4, **characterized in that** at least one restraining element (12, 41, 50) is capable of being connected to the base element (11, 58).

6. Apparatus according to one or more of Claims 1 to 5, **characterized in that** the restraining element (12, 41, 50) is dependent on the type of the or each optical cable to be restrained.

7. Apparatus according to one or more of Claims 1 to 6, **characterized in that** the restraining element (12, 41, 50) has a fixing device (22) for restraining a central element of the or each optical cable and/or a fixing device (22) for restraining strain-relief elements integrated in the cable sheath of the or each optical cable and/or a fixing device (22) for restraining fibres having a high tensile strength which are integrated in the cable sheath of the or each optical cable.

8. Apparatus according to one or more of Claims 1 to 7, **characterized in that** cutouts (27) for the engagement of projections (26) on the restraining element (12, 41, 50) are arranged at the first end (14) of the basic body (13) of the base element, and **in that** the projections (26) for engaging in the cutouts (27) in the base element (11, 58) are arranged at a second end (25) of the basic body (20, 49) of the restraining element.

9. Apparatus according to one or more of Claims 1 to 8, **characterized in that** the connection device (19) of the base element (11, 58) acts on a second section (30) of the basic body (20, 49) of the restraining element (12, 41, 50).

10. Apparatus according to one or more of Claims 1 to 9, **characterized in that** an optical cable to be restrained is capable of being fixed on the first section (29) via a hose clamp (33).

11. Apparatus according to Claim 10, **characterized in that** a plurality of optical cables to be restrained are capable of being fixed on the first section (29) via a clamping device (42) associated with the first section.

12. Cable joint for the structured laying and handling of optical waveguides, having a sealing body (55) for introducing at least one optical cable, and having a plurality of splicing cassettes for laying optical waveguides, **characterized by** at least one apparatus according to one or more of Claims 1 to 11.

13. Cable joint according to Claim 12, **characterized in that** a plurality of slit-like guides (57), which run approximately parallel to one another and into which the base elements (11, 58) can be introduced with correspondingly shaped projections (15, 16, 17), are arranged on an inner side (56) of the sealing body.

14. Method for providing a system of restraint for an optical cable using at least one apparatus according to one or more of Claims 1 to 11, having the following steps:
a) providing a cable joint according to Claim 12 or 13,
b) providing an apparatus according to one or more of Claims 1 to 11,
c) providing an optical cable to be restrained,
d) fixing the base element to the sealing body of the cable joint,
e) fixing the cable to the restraining element,
f) connecting the restraining element with the optical cable fixed to the restraining element to the base element.

## Revendications

1. Dispositif pour recevoir au moins un câble optique présentant une enveloppe de câble, plusieurs guides d'ondes optiques et au moins un élément de décharge de traction, **caractérisé par** une construction modulaire de deux modules séparés physiquement et fonctionnellement l'un de l'autre, à savoir d'un élément de base (11, 58) et d'un élément de réception (12, 41, 50) :
a) l'élément de base (11, 58) présentant un corps de base (13) approximativement en forme de barre ou de plaque, au moins une saillie (15, 16, 17) de type tourillon et coudée pour la fixation de l'élément de base (11, 58) sur un corps d'étanchéité (55) d'un manchon de câble étant réalisée sur une première extrémité (14) du corps de base (13) de l'élément de base ;
b) l'élément de réception (12, 41, 50) présentant un corps de base (20, 49) approximativement en forme de barre ou de plaque, au moins un dispositif de fixation (22) pour l'élément ou chaque élément de décharge de traction du ou de chaque câble optique à recevoir étant disposé sur une première extrémité (21) du corps de base (20, 49) de l'élément de réception, le ou chaque câble optique à recevoir pouvant être fixé sur une première portion (29) du corps de base (20, 49) de l'élément de réception (12, 41, 50) ;
c) l'élément de base (11, 58) fixé sur le corps d'étanchéité et l'élément de réception (12, 41, 50) avec le ou chaque câble optique reçu sur l'élément de réception (12, 41, 50) pouvant être connectés l'un à l'autre par le biais d'un dispositif de connexion (19, 59).

2. Dispositif selon la revendication 1, **caractérisé en ce que** l'élément de base (11, 58) est indépendant du type du ou de chaque câble optique à recevoir.

3. Dispositif selon la revendication 1 ou 2, **caractérisé en ce que** le dispositif de connexion (19, 59) est disposé à une deuxième extrémité du corps de base (13) de l'élément de base (11, 58), l'élément de réception (12, 41, 50) pouvant être connecté à l'élément de base (11, 58) par le biais du dispositif de connexion (19, 29) de manière desserrable.

4. Dispositif selon l'une quelconque ou plusieurs des revendications 1 à 3, **caractérisé en ce que** le dispositif de connexion (19) est réalisé sous forme de pince rotative.

5. Dispositif selon l'une quelconque ou plusieurs des revendications 1 à 4, **caractérisé en ce qu'**au moins un élément de réception (12, 41, 50) peut être connecté à l'élément de base (11, 58).

6. Dispositif selon l'une quelconque ou plusieurs des revendications 1 à 5, **caractérisé en ce que** l'élément de réception (12, 41, 50) est indépendant du type du ou de chaque câble optique à recevoir.

7. Dispositif selon l'une quelconque ou plusieurs des revendications 1 à 6, **caractérisé en ce que** l'élément de réception (12, 41, 50) présente un dispositif de fixation (22) pour recevoir un élément central du ou de chaque câble optique et/ou un dispositif de fixation (22) pour recevoir des éléments de décharge de traction intégrés dans l'enveloppe de câble du ou de chaque câble optique et/ou un dispositif de fixation (22) pour recevoir des fibres résistant à la traction intégrées dans l'enveloppe de câble du ou de chaque câble optique.

8. Dispositif selon l'une quelconque ou plusieurs des revendications 1 à 7, **caractérisé en ce que** des évidements (27) pour l'engagement de saillies (26) de l'élément de réception (12, 41, 50) sont disposés sur la première extrémité (14) du corps de base (13) de l'élément de base et **en ce que** les saillies (26) pour l'engagement dans les évidements (27) de l'élément de base (11, 58) sont disposées sur une deuxième extrémité (25) du corps de base (20, 49) de l'élément de réception.

9. Dispositif selon l'une quelconque ou plusieurs des revendications 1 à 8, **caractérisé en ce que** le dispositif de connexion (19) de l'élément de base (11, 58) vient en prise sur une deuxième portion (30) du corps de base (20, 49) de l'élément de réception (12, 41, 50).

10. Dispositif selon l'une quelconque ou plusieurs des revendications 1 à 9, **caractérisé en ce qu'**un câble optique à recevoir peut être fixé sur la première portion (29) par le biais d'un collier de serrage (33) .

11. Dispositif selon la revendication 10, **caractérisé en ce que** plusieurs câbles optiques à recevoir peuvent être fixés sur la première portion (29) par le biais d'un dispositif de serrage (42) associé à la première portion.

12. Manchon de câble pour la manipulation ou la pose structurée de guides d'ondes optiques, comprenant un corps d'étanchéité (55) pour l'introduction d'au moins un câble optique, et comprenant plusieurs cassettes d'épissurage pour poser le guide d'ondes optique, **caractérisé par** au moins un dispositif selon l'une quelconque ou plusieurs des revendications 1 à 11.

13. Manchon de câble selon la revendication 12, **caractérisé en ce que**, sur un côté intérieur (56) du corps d'étanchéité sont disposés plusieurs guides (57) de type fente, s'étendant approximativement parallèlement les uns aux autres, dans lesquels peuvent être introduits les éléments de base (11, 58) avec des saillies (15, 16, 17) configurées de manière correspondante.

14. Procédé pour assurer une réception d'un câble optique en utilisant au moins un dispositif selon l'une quelconque ou plusieurs des revendications 1 à 11, comprenant les étapes suivantes :
a) mise à disposition d'un manchon de câble selon la revendication 12 ou 13,
b) mise à disposition d'un dispositif selon l'une quelconque ou plusieurs des revendications 1 à 11,
c) mise à disposition d'un câble optique à recevoir,
d) fixation de l'élément de base sur le corps d'étanchéité du manchon de câble,
e) fixation du câble sur l'élément de réception,
f) connexion de l'élément de réception avec le câble optique fixé sur l'élément de réception à l'élément de base.
